# EUROPÄISCHE PATENTANMELDUNG

(11) **EP 4 403 087 A1**
(43) Veröffentlichungstag der Anmeldung: **24.07.2024**
(21) Anmeldenummer: 23217939.0
(22) Anmeldetag: 19.12.2023
(51) Int. Cl.: A47L 15/42, A47L 15/48, A47L 15/24

(54) **SPÜLMASCHINE MIT WÄRMERÜCKGEWINNUNGSVORRICHTUNG**

(30) Priorität: 16.01.2023 DE 102023100906
(71) Anmelder: Illinois Tool Works Inc., Glenview IL 60025 (US)
(72) Erfinder: DISCH, Harald, Glenview, Illinois, 60025 (US); SCHREMPP, Martin, Glenview, Illinois, 60025 (US)
(74) Vertreter: Meissner Bolte Partnerschaft mbB

(57) **Zusammenfassung**

Die Erfindung betrifft eine Spülmaschine (1), wobei die Spülmaschine (1) eine Wärmerückgewinnungsvorrichtung (50) aufweist, die ausgebildet ist, zumindest einen Teil der thermischen Energie des beim Betrieb der Spülmaschine (1) aus der Spülmaschine (1) abzuführenden Abwassers und/oder zumindest einen Teil der thermischen Energie der beim Betrieb der Spülmaschine (1) aus der Spülmaschine (1) abzuführenden Abluft als Nutzwärme rückzugewinnen und auf mindestens eine in der Spülmaschine (1) zu versprühende Behandlungsflüssigkeit und/oder auf eine zur Trocknung in der Spülmaschine (1) verwendete Trocknungsluft zu übertragen. Erfindungsgemäß ist insbesondere vorgesehen, dass die Wärmerückgewinnungsvorrichtung (50) ein Primärkreislaufsystem mit einer Wärmepumpen-Baugruppe (6) und mindestens ein Sekundärkreislaufsystem (5) aufweist, wobei die Wärmepumpen-Baugruppe (6) ausgebildet ist, zumindest einen Teil der rückzugewinnenden thermischen Energie auf ein in dem Primärkreislaufsystem zirkulierendes Kältemittel zu übertragen, und wobei die Wärmepumpen-Baugruppe (6) eine Wärmetauschereinheit (8) und das Sekundärkreislaufsystem (5) mindestens eine in Fluidverbindung mit der Wärmetauschereinheit (8) der Wärmepumpen-Baugruppe (6) stehende Wärmetauschereinheit (9) aufweist, wobei mit Hilfe der Wärmetauschereinheit (8) der Wärmepumpen-Baugruppe (6) zumindest ein Teil der auf das in dem Primärkreislaufsystem zirkulierende Kältemittel übertragenen thermischen Energie auf ein in dem Sekundärkreislaufsystem (5) zirkulierendes Trägermedium übertragen wird, und wobei mit Hilfe der Wärmetauschereinheit (9) des Sekundärkreislaufsystems (5) zumindest ein Teil der auf das Trägermedium übertragenen thermischen Energie als Nutzwärme auf die in der Spülmaschine (1) zu versprühende Behandlungsflüssigkeit und/oder auf die Trocknungsluft übertragen wird.

## Beschreibung

Die vorliegende Erfindung betrifft allgemein das Fachgebiet insbesondere des gewerblichen Spülens.

Im Einzelnen betrifft die vorliegende Erfindung eine Spülmaschine, insbesondere gewerbliche Spülmaschine, welche als Programmautomat oder als Transportspülmaschine ausgeführt ist.

Gemäß einem Aspekt der Erfindung betrifft diese insbesondere eine Transportspülmaschine mit einer Transportvorrichtung zum Transportieren von Spülgut durch die einzelnen Behandlungszonen der Transportspülmaschine, wobei die Transportspülmaschine mindestens eine Waschzone aufweist, in welcher Waschflüssigkeit aus einem der Waschzone zugeordneten Waschtank auf das Spülgut gesprüht wird. Die Transportspülmaschine gemäß diesem Aspekt der Erfindung weist ferner mindestens eine in Transportrichtung des Spülguts gesehen hinter der mindestens einen Waschzone angeordnete Klarspülzone auf, in welcher Klarspülflüssigkeit auf das Spülgut gesprüht wird. Darüber hinaus weist die Transportspülmaschine ein Abluftsystem auf, um im Betrieb der Maschine anfallende Abluft aus der Transportspülmaschine abzuführen.

Eine Transportspülmaschine (engl.: "conveyer warewasher") gemäß der vorliegenden Erfindung ist insbesondere eine Bandtransportspülmaschine (engl.: "slight-type warewasher") oder eine Korbtransportspülmaschine (englisch: "rack conveyer warewasher").

Eine Transportspülmaschine der eingangs genannten Art ist im Prinzip aus dem Stand der Technik bekannt und findet üblicherweise im gewerblichen Bereich Anwendung. Im Gegensatz zu sogenannten Programmautomaten, bei welchen das zu reinigende Spülgut während der Reinigung ortsfest in der Maschine verbleibt, findet bei Transportspülmaschinen ein Transport des Spülguts durch verschiedene Behandlungszonen der Transportspülmaschine statt.

Eine Transportspülmaschine weist als Behandlungszonen üblicherweise mindestens eine Vorwaschzone sowie mindestens eine Hauptwaschzone auf, welche in Transportrichtung des Spülguts gesehen nach der/den Vorwaschzone(n) angeordnet ist. In Transportrichtung gesehen ist nach der/den Hauptwaschzone(n) in der Regel mindestens eine Klarspülzone angeordnet.

Auch ist es bekannt zwischen der Hauptwaschzone und der Klarspülzone noch mindestens eine Nachwaschzone bzw. Vorspülzone vorzusehen.

In Transportrichtung des Spülguts gesehen läuft das etwas entweder unmittelbar auf ein Transportband aufgenommene Spülgut oder durch Spülkörbe gehaltene Spülgut üblicherweise durch einen Einlauftunnel, die sich daran anschließende(n) Vorwaschzone(n), Hauptwaschzone(n), ggf. vorgesehene(n) Nachwaschzone(n), Klarspülzone(n), eine Trocknungszone in eine Auslaufstrecke ein.

Den genannten Waschzonen (Vorwaschzone(n), Hauptwaschzone(n) und ggf. vorgesehene(n) Nachwaschzone(n)) der Transportspülmaschine sind jeweils ein Waschsystem zugeordnet, welches eine Waschpumpe und ein mit der Waschpumpe verbundenes Leitungssystem aufweist, über welches entsprechenden Sprühdüsen der Waschzonen Waschflüssigkeit zugeführt wird. Die den Sprühdüsen zugeführte Waschflüssigkeit wird in der jeweiligen Waschzone auf das Spülgut gesprüht, welches von einer Transportvorrichtung der Transportspülmaschine durch die jeweiligen Waschzonen transportiert wird.

Jeder Waschzone ist ein Waschtank zugeordnet, in welcher versprühte Flüssigkeit aufgenommen wird und/oder in welchem Flüssigkeit für die Sprühdüsen der betreffenden Zonen bereitgestellt wird.

Bei den aus dem Stand der Technik bekannten Transportspülmaschinen wird Klarspülflüssigkeit in Form von Frischwasser, welches rein oder mit weiteren Zusätzen, wie beispielsweise Klarspüler, versetzt sein kann, über die Sprühdüsen der Klarspülzone auf des Spülgut gesprüht. Zumindest ein Teil der versprühten Klarspülflüssigkeit wird über ein Kaskadensystem entgegen der Transportrichtung des Spülguts von Behandlungszone zu Behandlungszone transportiert.

Die versprühte Klarspülflüssigkeit wird in einem Tank (Nachwaschtank) der Nachwaschzone aufgefangen, von welchem sie über die Waschpumpe des zur Nachwaschzone gehörenden Waschsystems zu den Sprühdüsen (Nachwaschdüsen) der Nachwaschzone gefördert wird. In der Nachwaschzone wird Waschflüssigkeit von dem Spülgut abgespült. Die hierbei anfallende Flüssigkeit fließt in den Waschtank der zumindest einen Hauptwaschzone, welche in Transportrichtung des Spülguts gesehen der Nachwaschzone vorgeschaltet ist. Hier wird die Flüssigkeit üblicherweise mit einem Reiniger versehen und durch ein zu dem Waschsystem der Hauptwaschzone gehörenden Pumpensystem (Waschpumpensystem) über die Düsen (Waschdüsen) der Hauptwaschzone auf das Spülgut gesprüht.

Von dem Waschtank der Hauptwaschzone fließt die Flüssigkeit - sofern keine weitere Hauptwaschzone vorgesehen ist - anschließend in den Vorwaschtank der Vorwaschzone. Die Flüssigkeit in dem Vorwaschtank wird mit einem zu dem Waschsystem der Vorwaschzone gehörenden Pumpensystem über die Vorwaschdüsen der Vorwaschzone auf das Spülgut gesprüht, um grobe Verunreinigungen von dem Spülgut zu entfernen.

Im Bereich des gewerblichen Spülens gibt es verschiedene Normen bzw. Richtlinien, in denen die Anforderungen bzgl. der Hygieneleistung von Reinigungsprozessen und deren Verfahrensprüfungen definiert sind. Allen Normen bzw. Richtlinien ist gemeinsam, dass während des Reinigungsprozesses Mindesttemperaturen in den Wasch- und Spülzonen der gewerblichen Spülmaschine vorgeschrieben sind. Auf diese Weise soll u. a. zumindest teilweise eine thermische Desinfektion erfolgen.

Die Anforderungen hinsichtlich der vorgegebenen Mindesttemperaturen in den betreffenden Behandlungszonen der Transportspülmaschine hat zur Folge, dass im Betrieb der gewerblichen Spülmaschine relativ viel Energie aufzuwenden ist, um die Wasch- bzw. Spülflüssigkeiten auf die geforderten Mindesttemperaturen zu erhitzten. Andererseits werden bei derzeit bekannten Transportspülmaschinen bis zu 55 % der beim Betrieb der Transportspülmaschine eingebrachten Energie als Verlustwärme an Abwasser und Abluft abgegeben.

Das vorstehend unter Bezugnahme auf eine Transportspülmaschine diskutierte Problem, nämlich dass im Betrieb der Spülmaschine ein Großteil der beim Betrieb der Maschine eingebrachten Energie als Verlustwärme an Abwasser und Abluft abgegeben wird, existiert aber auch bei Spülmaschinen, insbesondere gewerblichen Spülmaschinen, welche als Programmautomat ausgebildet sind.

Programmautomaten sind manuell beladbare und entladbare Spülmaschinen. Die Programmautomaten (auch als "box-type warewashers" oder als "batch dishwashers" bezeichnet) können Geschirrkorbdurchschubspülmaschinen, auch Haubenspülmaschinen ("hood-type warewashers") genannt oder Frontlader ("front loader warewashers") sein. Frontlader können Untertischmaschinen ("undercounter machines"), Auftischmaschinen ("top counter machines") oder freistehende Spülmaschinen mit Frontbeschickung ("free standing front loaders") sein.

Eine als Programmautomat ausgebildete Spülmaschine weist üblicherweise eine Behandlungskammer zum Reinigen von Spülgut auf. In der Regel ist unter der Behandlungskammer ein Waschtank angeordnet, in welchem Flüssigkeit aus der Behandlungskammer durch Schwerkraft zurückfließen kann. Im Waschtank befindet sich Waschflüssigkeit, welche üblicherweise Wasser ist, dem gegebenenfalls Reiniger zugeführt werden kann.

Eine als Programmautomat ausgebildete Spülmaschine weist üblicherweise ferner ein Waschsystem mit einer Waschpumpe, einem mit der Waschpumpe verbundenen Leitungssystem und mit einer Vielzahl von in mindestens einem Wascharm ausgebildeten Sprühdüsen auf. Die sich im Waschtank befindliche Waschflüssigkeit kann von der Waschpumpe über das Leitungssystem zu den Waschdüsen gefördert und durch die Waschdüsen in der Behandlungskammer auf das zu reinigende Spülgut gesprüht werden. Die versprühte Waschflüssigkeit fließt anschließend in den Waschtank zurück.

Eine solche als Programmautomat ausgebildete Spülmaschine ist beispielsweise aus der Druckschrift DE 10 2005 023 429 A1 bekannt.

Unter dem hierin verwendeten Begriff "Spülgut" ist insbesondere Geschirr, Gläser, Besteck, Kochutensilien, Backutensilien und Servier-Tabletts zu verstehen.

Eine als Programmautomat ausgebildete gewerbliche Spülmaschine unterscheidet sich von einer Haushaltsspülmaschine insbesondere dadurch, dass eine gewerbliche Spülmaschine derart konzipiert sein muss, dass - abhängig von dem gewählten Reinigungsprogramm - Programmlaufzeiten zwischen einer und fünf Minuten realisiert werden können, während Haushaltsspülmaschinen in der Regel Laufzeiten von bis zu 2,5 Stunden oder darüber haben. Aufgrund der bei gewerblichen Spülmaschinen geforderten kurzen Programmdauer sind bei Haushaltsspülmaschinen eingesetzte Techniken in der Regel nicht ohne Weiteres auf gewerbliche Spülmaschinen übertragbar.

Gewerbliche Spülmaschinen, welche als Programmautomat ausgebildet sind, arbeiten üblicherweise in zwei Hauptprozessschritten: einem ersten Schritt, welcher Waschen mit einer Waschflüssigkeit beinhaltet, und einem zweiten Schritt, welcher das Klarspülen mit erwärmtem Frischwasser und dosiertem Klarspüler beinhaltet.

Um diese Prozessschritte durchführen zu können, ist eine als Programmautomat ausgebildete gewerbliche Spülmaschine in der Regel mit zwei unabhängigen Flüssigkeitssystemen ausgestattet, die vollständig voneinander getrennt sind. Das eine Flüssigkeitssystem ist ein Waschwasserkreislauf, welcher für die Waschung des Spülgutes zuständig ist, wobei die Waschung mit rezirkuliertem Wasser aus dem Waschtank der Spülmaschine durchgeführt wird. Das andere Flüssigkeitssystem ist ein Frischwassersystem, das für die Klarspülung zuständig ist. Die Klarspülung wird mit Frischwasser, vorzugsweise mit Frischwasser aus einem Wassererhitzer (engl. "boiler"), durchgeführt. Das Frischwasser wird nach dem Versprühen ebenfalls vom Waschtank der Spülmaschine aufgenommen.

Die Hauptaufgabe der Klarspülung ist es, auf dem Spülgut befindliche Lauge zu entfernen. Zusätzlich dient das während des Klarspülschrittes in den Waschtank fließende Klarspülwasser zur Regeneration des im Waschtank vorhandenen Waschwassers.

Bevor durch die Klarspülung Frischwasser als Klarspülflüssigkeit versprüht und dadurch in den Waschtank der Spülmaschine geleitet wird, wird eine der Frischwassermenge gleiche Menge an Waschflüssigkeit aus dem Waschtank abgepumpt.

Üblicherweise sind gewerbliche Spülmaschinen, die als Programmautomat ausgebildet sind, mit mehreren Programmen ausgestattet. Diese Programme unterscheiden sich hauptsächlich durch verschieden lange Programmlaufzeiten des Waschprozesses. Die Bedienperson hat die Möglichkeit, bei leicht verschmutztem Spülgut ein kurzes Waschprogramm zu wählen oder bei stark verschmutztem Spülgut ein entsprechend längeres Waschprogramm zu wählen.

Gewerbliche Spülmaschinen, welche als Programmautomat und zum chargenweisen Beladen und Entladen der Behandlungskammer mit Spülgut ausgebildet sind, sind insbesondere Fronttür-Maschinen oder Korbdurchschub-Maschinen. Bei Fronttür-Maschinen wird das Spülgut in einen Korb gestellt, und der mit Spülgut beladene Korb wird durch eine Fronttür in die Behandlungskammer der Spülmaschine gestellt und nach dem Reinigen wieder durch die Fronttür entnommen. Bei Korbdurchschub-Maschinen werden die mit Spülgut beladenen Geschirrkörbe von einer Eingangsseite manuell in die Behandlungskammer geschoben und nach Beendigung eines Spülprogramms von einer Ausgangsseite aus der Behandlungskammer manuell entnommen. Fronttür-Maschinen und Korbdurchschub-Maschinen enthalten nur eine einzige Behandlungskammer zum Behandeln des Spülguts. Die Fronttür-Maschinen können Untertisch-Maschinen oder Übertisch-Maschinen sein.

Bei gewerblichen Spülmaschinen, die als Programmautomat ausgebildet sind, kommen in der Hauptsache zwei Trocknungsverfahren zum Einsatz. Beim ersten Verfahren wird das nach dem Klarspülprozess noch heiße Spülgut aus der Maschine entnommen, wo es dann an der Umgebungsluft in vier bis zehn Minuten trocknet. Zum Trocknen des Spülguts wird dieses bei dem vorstehend beschriebenen Verfahren üblicherweise in den Körben belassen, in welchen es zur Reinigung in der Spülmaschine angeordnet wurde.

Gemäß dem zweiten Verfahren erfolgt eine Lufttrocknung innerhalb der Behandlungskammer der Spülmaschine. Hierbei kommen Frischlufttrocknungssysteme zum Einsatz. Derartige Frischtrocknungssysteme für gewerbliche Fronttür- bzw. Untertischspülmaschinen arbeiten stets mit einem hohen Luftvolumenstrom im Bereich von 25 bis 100 m³ pro Stunde, um das in der Behandlungskammer verbleibende Spülgut in einer sehr kurzen Zeit trocknen zu können. Die hohen Luftvolumenströme sind durch die Kürze des Trocknungsvorgangs im gewerblichen Bereich bedingt. Im Vergleich zu einer konventionellen Trocknung einer Haushaltsgeschirrspülmaschine ist die aktive Trocknungszeit einer gewerblichen Geschirrspülmaschine um ein Vielfaches kürzer. Während die Programmlaufzeittrocknung in einer Haushaltsspülmaschine ca. 30 Minuten bis 2,5 Stunden beträgt, beträgt die Programmlaufzeittrocknung im gewerblichen Einsatz zwischen 1,5 und 5 Minuten.

Bei einer Lufttrocknung in einer als Programmautomat ausgebildeten gewerblichen Spülmaschine wird Frischluft von außen angesaugt und durch die Behandlungskammer der Spülmaschine geleitet, um Feuchtigkeit von dem zu trocknenden Spülgut aufzunehmen. In der Regel wird anschließend die mit Feuchtigkeit beladene Trocknungsluft als Abluft in den Aufstellraum der Spülmaschine ausgeblasen.

Insbesondere in Spülküchen, in denen mehrere als Programmautomat ausgebildete Spülmaschinen zum Teil gleichzeitig betrieben werden, führt das Ausblasen der Trocknungsluft in den Aufstellraum zu einer negativen Beeinflussung des Raumklimas, da durch das Ausblasen der mit Feuchtigkeit beladenen und im Vergleich zu der Luft im Aufstellraum warmen Trocknungsluft der Feuchtegehalt der Luft im Aufstellraum (Umgebungsluft) zwangsläufig erhöht wird. Insbesondere besteht dabei die Gefahr, dass der Feuchtegehalt der Luft im Aufstellraum so weit erhöht wird, dass unerwünschte Kondensation von Wasserdampf insbesondere an kühlen Grenzflächen im Aufstellraum auftritt.

Abgesehen hiervon geht die bei Programmautomaten geforderte verkürzte Trocknungszeit in zwangsläufiger Weise mit einem erhöhten Energieverbrauch einher, um die Trocknungsluft entsprechend aufzuheizen.

Um im Betrieb einer Spülmaschine - sei es eine als Programmautomat oder als Transportspülmaschine ausgeführte Maschine - Ressourcen, insbesondere Energie, einzusparen, ist es bereits aus dem Stand der Technik bekannt, Abwasserund Abluftwärmerückgewinnungssysteme einzusetzen, mit denen zumindest ein Teil der kinetischen Energie des Abwassers und/oder der Abluft der Maschine als Nutzwärme rückgewonnen werden kann.

Diesbezüglich sei beispielsweise auf die Druckschrift DE 10 2014 208 813 A1 verwiesen, die eine Transportspülmaschine mit einer Wärmerückgewinnungsvorrichtung betrifft.

Als Abluftwärmerückgewinnungssystem kommt bei der aus diesem Stand der Technik bekannten Transportspülmaschine eine Wärmepumpeneinrichtung zum Einsatz. Mit Hilfe dieser Wärmepumpeneinrichtung wird ein Teil der kinetischen Energie der Abluft der Transportspülmaschine auf ein in der Wärmepumpeneinrichtung zirkulierendes Kältemittel übertragen. Dabei wird die rückzugewinnende kinetische Energie durch Verdampfen des Kältemittels bei niedrigem Druck in einer Verdampfereinrichtung aufgenommen. Das gasförmige Kältemittel wird anschließend von einer Verdichtereinheit auf ein höheres Druckniveau verdichtet und dann in einer Verflüssigereinheit bei hoher Temperatur verflüssigt. Anschließend wird das Kältemittel mit Hilfe einer Expansionsventileinrichtung wieder auf den Verdampfungsdruck entspannt. Die Verflüssigungstemperatur des Kältemittels in der Verflüssigereinrichtung wird dazu verwendet, um die Klarspülflüssigkeit oder Waschflüssigkeit der Transportspülmaschine zu erwärmen. Hierzu ist ein entsprechender Wärmeübertrager in dem Klarspülflüssigkeitstank oder Waschflüssigkeitstank vorgesehen.

Somit bietet es sich die Wärmepumpentechnik als eine effektive Methode zur Rückgewinnung der in der feuchtwarmen Abluft einer Spülmaschine gespeicherten Energie an. Der feuchtwarme Luftstrom der Abluft der Spülmaschine kann über eine Verdampfereinrichtung einer Kälteanlage geführt werden, infolgedessen die Maschinenabluft auf Umgebungsniveau abgekühlt wird. Durch den Energietransfer verdampft das Kältemittel der Wärmepumpe und wird nach vollständiger Verdampfung und Überhitzung im gasförmigen Zustand durch den Wärmepumpenkompressor verdichtet und auf ein höheres Druck- und Temperaturniveau gebracht. Auf der Hochdruckseite wird die Energie als Wärmeleistung an die Wasch- , Klarspül- und/oder Trocknungszone der Transportspülmaschine abgegeben, dabei kondensiert, verflüssigt und unterkühlt das Kältemittel, bevor es über ein Expansionsventil entspannt und dadurch ein niedrigeres Druckniveau erreicht wird.

Durch die Wärmepumpentechnologie ist es möglich, die in der Abluft befindliche Energie vollständig zurückzugewinnen und die Abluft dadurch dem Aufstellraum (Spülküche) energetisch neutral zuzuführen. Es wird also kein bauseitiges Abluftsystem benötigt, da die Abluft der Maschine dem Raum direkt zugeführt werden kann.

Die derzeit eingesetzten Abluftwärmepumpen werden mit den Kältemitteln R513a in Europa und R450a in Nordamerika betrieben. Im Vergleich zu dem früher eingesetzten Kältemittel R134a haben diese beiden Kältemittel bereits einen deutlich besseren GWP-Wert von 631 bzw. 605 im Vergleich zu 1.430 bei R134a.

"GWP" ist die Abkürzung für "Global Warming Potential", steht also für das Erderwärmungs- bzw. Treibhauspotenzial einer Substanz. Der GWP-Wert eines Kältemittels definiert dessen relatives Treibhauspotenzial in Bezug auf CO₂ (auch als CO₂-Äquivalent bezeichnet).

Auch die bisher in Wärmepumpen hauptsächlich genutzten Kältemittel, insbesondere R513a und R450a, sind aus verschiedenen Gründen des Umwelt- und Klimaschutzes nicht unbedenklich, da sie noch eine nicht unerhebliche Treibhauswirkung aufweisen.

Demnach besteht ein Bestreben danach, ein Abwasser- und/oder Abluftwärmerückgewinnungssystem einer insbesondere gewerblichen Spülmaschine anzugeben, wobei das Abwasser- und/oder Abluftwärmerückgewinnungssystem möglichst geringe potenzielle negative Umweltwirkungen aufweist.

Natürliche Kältemittel, wie zum Beispiel Propan (R290a) oder Isobutan (R600a) haben - im Vergleich zu beispielsweise dem Kältemittel R513a oder dem Kältemittel R450a - zwar den Vorteil, dass ihr GWP-Wert mit jeweils 3 deutlich geringer ist; allerding sind diese Kältemittel im Gegensatz zu R513a und R450a leicht entflammbar, was im Hinblick auf die Betriebssicherheit der Anlage einige gravierende Änderungen zum bekannten Wärmepumpenkonzept für gewerbliche Spülmaschinen mit sich bringt.

Hierbei ist zu berücksichtigen, dass Wärmepumpensysteme mit natürlichen Kältemitteln, insbesondere Kohlenwasserstoffe (wie Propan R290a oder Isobutan R600a), wenn überhaupt, nur bedingt in umschlossenen Räumen eingesetzt werden dürfen.

Kohlenwasserstoffe sind brennbar und werden gemäß DIN EN 378-1:2016+A1:2020 in die Sicherheitsgruppe A3 eingestuft. Nach dem aktuellen Produktsicherheitsstandard DIN EN 60335-2-40:2014-01 können brennbare Kältemittel im Innenraum nur mit geringeren Kapazitäten und nur mit einer sehr geringen Kältemenge-Füllmenge genutzt werden (unabhängig von der Größe des Raums). Bei größeren Füllmengen sind besondere Maßnahmen, wie zum Beispiel Zwangsentlüftung, erforderlich.

Daher werden Kohlenwasserstoffe derzeit nur in Heizungswärmepumpen kleinerer Leistung und vor allem in außen aufgestellten Wärmepumpen eingesetzt. Im Au-ßenbereich sind Füllmengen von bis zu 5 kg zulässig.

Das natürliche Kältemittel R744 (CO₂) zeichnet sich aufgrund seiner thermodynamischen Eigenschaften durch hohe Leistungszahlen beim Einsatz in Brauchwasserwärmepumpen aus, wohingegen die Einsatzmöglichkeiten in Heizungswärmepumpen für Spülmaschinen durch die überkritische Wärmeabgabe limitiert werden. Für COz-Wärmepumpen ist die Energieeffizienz bei geringeren Temperaturspreizungen, wie für die Rückgewinnung von Abluftwärme, geringer. Sowohl R744 (CO₂) als auch R717 (Ammoniak) kommen hauptsächlich in größeren Leistungsbereichen zum Einsatz und haben derzeit wenig Relevanz für Wärmepumpen bei Spülmaschinen.

Aufgrund dieser Problemstellung liegt der vorliegenden Erfindung die Aufgabe zu Grunde, eine Spülmaschine, insbesondere gewerbliche Spülmaschine, mit einem Abluft- und/oder Abwärmerückgewinnungssystem anzugeben, wobei das Abluft- /Abwasserwärmerückgewinnungssystem nicht die im Zusammenhang mit den bisher üblicherweise verwendeten Kältemitteln R513a bzw. R450a beschriebenen Probleme hinsichtlich des Umwelt- und Klimaschutzes aufweist, und wobei gleichzeitig das Wärmerückgewinnungssystem ohne zusätzliche bauliche Maßnahmen im Innenraum bzw. in einer Spülküche eingesetzt werden kann.

Diese Aufgabe wird erfindungsgemäß durch den Gegenstand des unabhängigen Patentanspruchs 1 gelöst, wobei vorteilhafte Weiterbildungen hiervon in den abhängigen Ansprüchen angegeben sind.

Demgemäß betrifft die Erfindung insbesondere eine Spülmaschine, insbesondere gewerbliche Spülmaschine, welche als Programmautomat oder als Transportspülmaschine ausgeführt ist. Die Spülmaschine weist eine Wärmerückgewinnungsvorrichtung auf, die ausgebildet ist, zumindest einen Teil der thermischen Energie des beim Betrieb der Spülmaschine aus der Spülmaschine abgeführten oder abzuführenden Abwassers und/oder zumindest einen Teil der thermischen Energie der beim Betrieb der Spülmaschine aus der Spülmaschine abgeführten oder abzuführenden Abluft als Nutzwärme rückzugewinnen und auf mindestens eine in der Spülmaschine zu versprühende Behandlungsflüssigkeit, insbesondere Waschflüssigkeit und/oder Klarspülflüssigkeit, und/oder auf eine zur Trocknung in der Spülmaschine verwendete Trocknungsluft zu übertragen.

Erfindungsgemäß ist insbesondere vorgesehen, dass die Wärmerückgewinnungsvorrichtung ein Primärkreislaufsystem mit einer Wärmepumpen-Baugruppe und mindestens ein Sekundärkreislaufsystem aufweist. Die Wärmepumpen-Baugruppe ist ausgebildet, zumindest einen Teil der rückzugewinnenden thermischen Energie des Abwassers und/oder der Abluft auf ein in dem Primärkreislaufsystem zirkulierendes Kältemittel zu übertragen.

Andererseits weist die Wärmepumpen-Baugruppe eine dem Sekundärkreislaufsystem zugeordnete Wärmetauschereinheit auf, während das Sekundärkreislaufsystem mindestens eine in Fluidverbindung mit der Wärmetauschereinheit der Wärmepumpen-Baugruppe stehende zweite Wärmetauschereinheit aufweist. Mit Hilfe der Wärmetauschereinheit der Wärmepumpen-Baugruppe wird zumindest ein Teil der auf das in dem Primärkreislaufsystem zirkulierende Kältemittel übertragenen thermischen Energie auf ein in dem Sekundärkreislaufsystem zirkulierendes fluides, insbesondere liquides, Trägermedium übertragen.

Mit Hilfe der mindestens einen Wärmetauschereinheit des Sekundärkreislaufsystems wird zumindest ein Teil der auf das in dem Sekundärkreislaufsystem zirkulierende Trägermedium übertragenen thermischen Energie als Nutzwärme auf die mindestens eine in der Spülmaschine zu versprühende Behandlungsflüssigkeit und/oder auf die Trocknungsluft übertragen.

Die mit der erfindungsgemäßen Lösung erzielbaren Vorteile liegen auf der Hand: insbesondere gestattet es die Unterteilung der Wärmerückgewinnungsvorrichtung in ein Primärkreislaufsystem einerseits und ein Sekundärkreislaufsystem andererseits, dass als das in dem Primärkreislaufsystem zirkulierende Kältemittel ein natürliches Kältemittel auf Kohlenwasserstoffbasis, wie beispielsweise Propan (R290a), Isobutan (R600a) oder Propan-Propen (R441a), verwendet werden kann. Die natürlichen Kältemittel haben im Vergleich beispielsweise zu dem Kältemittel R513a oder zu dem Kältemittel R450a den Vorteil, dass ihr GWP-Wert mit jeweils 3 deutlich geringer ist.

Zwar haben natürliche und auf Kohlenwasserstoff basierende Kältemittel im Unterschied zu beispielsweise R513a und R450a den Nachteil, dass sie leicht entflammbar sind, was im Hinblick auf die Betriebssicherheit der Anlage einige gravierende Änderungen zum bekannten Wärmepumpenkonzept für gewerbliche Spülmaschinen mit sich bringt, allerdings kann durch die Aufteilung der Wärmerückgewinnungsvorrichtung in das Primärkreislaufsystem und in das Sekundärkreislaufsystem in einer leicht zu realisierenden aber dennoch effektiven Weise erzielt werden, dass die Kältemittelfüllmenge auf ein geringstmögliches Minimum begrenzt werden kann.

Dabei liegt der Erfindung u.a. die Erkenntnis zugrunde, dass je geringer die Kältemittelmenge ist, welche bei einer Leckage oder Ähnlichem austreten kann, desto geringer ist das Risiko, dass sich dann mit der Umgebungsluft ein zündfähiges Gemisch bilden kann, welches ein erhebliches Sicherheitsrisiko darstellen kann.

Das erfindungsgemäße Design insbesondere der Wärmerückgewinnungsvorrichtung zielt hauptsächlich darauf ab, den Gesamtaufbau der eigentlichen Wärmepumpe möglichst kompakt zu halten. Dies beinhaltet zum einen volumetrisch möglichst kleine Komponenten zu verwenden. Zum anderen liegt bei diesem Design der Fokus aber vor allem darauf, das grundlegende Funktionskonzept der Wärmepumpe dahingehend anzupassen, die Wärmepumpe möglichst kompakt und ohne die bislang üblichen langen Kältemittelleitungen speziell zum Flüssigkeitstank (z.B. Waschtank) und/oder zur Trocknung auszuführen.

Hierbei liegt der Erfindung insbesondere auch die Erkenntnis zu Grunde, dass bei den heute bekannten Wärmepumpenkonzepten für gewerbliche Spülmaschinen zum Beheizen von Maschinenzonen, wie beispielsweise der Waschzone, Klarspülzone und Trocknungszone, die jeweiligen Maschinenzonen immer direkt mit dem heißen Kältemittel der Wärmepumpe beaufschlagt werden. Dies erfolgt, indem das heiße Kältemittel über relativ lange Kältemittelleitungen von der Verdampfereinrichtung inklusive Kompressor direkt in einen Wärmetauscher im Waschtank bzw. optional zusätzlich in der Trocknung geleitet wird. Dort gibt das heiße Kältemittel dann die Energie an das Waschwasser bzw. optional zusätzlich an die Trocknungsluft ab und strömt dann durch weitere relativ lange Kältemittelleitungen wieder zurück zur Verdampfereinrichtung.

Um eine effiziente Wärmeübertragung im Waschtank zu realisieren, wird hierzu ein Wärmeübertrager (Kondensator) mit einer vergleichsweise großen Wärmetauscherfläche von ca. 1,5 bis 2 m² benötigt, was aufgrund des aktuellen Funktionsprinzips der direkten Beaufschlagung des Wärmetauschers mit Kältemittel eine sehr hohe Kältemittelfüllmenge mit sich bringt.

Mit dem im unabhängigen Patentanspruch 1 vorgestellten Ansatz wird dieses Problem in einer besonders leicht zu realisierenden aber dennoch effizienten Weise gelöst.

Gemäß der im unabhängigen Patentanspruch 1 vorgeschlagenen Erfindung erfolgt die Beheizung der Betriebsflüssigkeit der Spülmaschine (Klarspülflüssigkeit oder Waschflüssigkeit) bzw. der Trocknungsluft nicht mehr direkt mittels direkt beaufschlagtem Kältemittel in der jeweiligen Behandlungszone der Spülmaschine, sondern mittels eines zusätzlichen Sekundärkreislaufs. Dadurch ist es möglich, die gesamte Wärmepumpe als kleine, kompakte und vor allem in sich geschlossene Einheit beispielsweise auf dem Dach der Transportspülmaschine auszuführen ohne Kältemittel direkt zu den Verbrauchern führen zu müssen.

Bei der erfindungsgemäßen Lösung erfolgt dies durch das Vorsehen des Sekundärkreislaufs und hier mit Hilfe eines weiteren Trägermediums, wie beispielsweise Wasser. Das Trägermedium wird in der Wärmepumpen-Baugruppe mit Hilfe eines kompakten Plattenwärmetauschers auf ca. 80°C erhitzt und dann mittels einer zusätzlichen Umwälzpumpe in den Wärmeüberträger beispielsweise im Waschtank geleitet, wo es dann die Energie an das Waschwasser abgibt, bevor es wieder in den vorzugsweise als Plattentauscher ausgeführten Wärmetauscher der Wärmepumpen-Baugruppe zurückfließt und der Kreislauf von neuem beginnt.

Vorzugsweise handelt es sich bei dem Sekundärkreislauf um einen geschlossenen Sekundärkreislauf.

Alternativ ist es aber auch denkbar, die zu erwärmende Betriebsflüssigkeit (Waschflüssigkeit oder Klarspülflüssigkeit) direkt im Kreislauf durch den vorzugsweise als Plattentauscher ausgeführten Wärmetauscher der Wärmepumpen-Baugruppe zu pumpen.

Gemäß bevorzugten Realisierungen der Spülmaschine kommt als das in dem Primärkreislaufsystem zirkulierende Kältemittel ein natürliches Kältemittel zum Einsatz, insbesondere auf der Basis von Kohlenwasserstoffen. Bevorzugt handelt es sich bei dem Kältemittel um Propan oder Isobutan oder einem Gemisch hiervon.

Die erfindungsgemäße Aufteilung der Wärmerückgewinnungsvorrichtung in ein Primärkreislaufsystem und in ein Sekundärkreislaufsystem ermöglicht es, dass die Masse des in dem Primärkreislaufsystem zirkulierenden Kältemittels auf maximal 1.000 g und vorzugsweise auf maximal 700 g und noch bevorzugter auf maximal 400 g und insbesondere auf maximal 150 g reduziert werden kann.

Die mindestens eine zweite Wärmetauschereinheit des Sekundärkreislaufsystems ist in einem Waschtank der Spülmaschine, in einem Frischwassertank der Spülmaschine und/oder in einem Bereich zum Erwärmen von Trocknungsluft angeordnet.

Gemäß bevorzugten Realisierungen der erfindungsgemäßen Spülmaschine ist vorgesehen, dass das Sekundärkreislaufsystem eine Wärmetauschereinheit aufweist, welche über ein erstes Abzweigungsleitungssystem mit der Wärmetauschereinheit der Wärmepumpen-Baugruppe in Fluidverbindung steht oder bedarfsweise mit Hilfe einer ersten Ventilanordnung mit der Wärmetauschereinheit der Wärmepumpen-Baugruppe in Fluidverbindung bringbar ist, wobei das Sekundärkreislaufsystem ferner mindestens eine zweite Wärmetauschereinheit aufweist, welche über ein insbesondere parallel zum ersten Abzweigungsleitungssystem verlaufendes zweites Abzweigungsleitungssystem mit der Wärmetauschereinheit der Wärmepumpen-Baugruppe in Fluidverbindung steht oder bedarfsweise mit Hilfe einer zweiten Ventilanordnung in Fluidverbindung mit der Wärmetauschereinheit der Wärmepumpen-Baugruppe bringbar ist.

Zur Realisierung der Wärmepumpen-Baugruppe ist insbesondere vorgesehen, dass diese in einen Hochdruckbereich und in einen Niederdruckbereich unterteilt ist.

Gemäß Ausführungsvarianten weist die Wärmepumpen-Baugruppe eine dem Niederdruckbereich zugeordnete Verdampfereinheit auf, welche derart ausgebildet ist, dass zumindest ein Teil der kinetischen Energie der Abluft und/oder des Abwassers der Spülmaschine auf das in dem Primärkreislaufsystem zirkulierende Kältemittel unter Verdampfen des Kältemittels übertragen wird.

Die Wärmepumpen-Baugruppe weist vorzugsweise ferner eine mit der Verdampfereinheit in Fluidverbindung stehende Verdichtereinheit auf, welche ausgebildet ist, das in der Verdampfereinheit verdampfte Kältemittel auf ein höheres Druckniveau zu verdichten. Ferner kommt eine dem Hochdruckbereich der Wärmepumpen-Baugruppe zugeordnete Verflüssigereinheit zum Einsatz, welche in Fluidverbindung mit der Verdichtereinheit steht und ausgebildet ist, das in der Verdichtereinheit verdichtete Kältemittel bei hoher Temperatur zu verflüssigen, wobei zumindest ein Teil der Verflüssigungstemperatur entsprechenden kinetischen Energie über die erste Wärmetauschereinheit auf das in dem Sekundärkreislaufsystem zirkulierende Trägermedium übertragen wird.

Schließlich umfasst die Wärmepumpen-Baugruppe eine in Fluidverbindung mit der Verflüssigereinheit und der Verdampfereinheit stehende Expansionsventileinheit auf, welche ausgebildet ist, das in der Verflüssigereinheit verflüssigte Kältemittel wieder auf den Verdampfungsdruck zu entspannen.

Vorzugsweise ist in diesem Zusammenhang insbesondere vorgesehen, dass die Einheiten der Wärmepumpen-Baugruppe in einem eigenen Gehäuse aufgenommen sind, welches derart an der Spülmaschine angeordnet ist, dass die Einheiten der Wärmepumpen-Baugruppe von außen zugänglich sind.

Insbesondere ist die Wärmepumpen-Baugruppe als ein austausch- oder auswechselbares Modul der Spülmaschine ausgeführt. Das Modul kann vorzugsweise auf dem Dach der Spülmaschine platziert werden und ist somit in einem Servicefall einfach komplett austauschbar, ohne dass hierfür ein Kältetechniker benötigt wird, da das Kältetechniksystem hierfür nicht mehr (wie bislang üblich) geöffnet werden muss.

Durch den Sekundärkreislauf können insbesondere mittels zusätzlichen Ventileinrichtungen in einer einfach zu realisierenden Weise mehrere Verbraucher bzw. Maschinenzonen parallel angefahren werden, so dass die Heizleistung je nach Bedarf auf einen oder mehrere Verbraucher aufgeteilt werden kann, ohne hierfür aufwändige Schaltungen oder Regelungen im Kältekreislauf zu benötigen.

Nachfolgend wird die Erfindung anhand von exemplarischen Ausführungsformen unter Bezugnahme auf die Zeichnungen näher beschrieben.

Es zeigen:
- FIG. 1: schematisch eine exemplarische Ausführungsform der erfindungsgemäßen Spülmaschine, die in diesem Ausführungsbeispiel als Transportspülmaschine ausgeführt ist; und
- FIG. 2: schematisch und in einer isometrischen Ansicht eine exemplarische Ausführungsform einer beispielsweise bei der Transportspülmaschine gemäß FIG. 1 zum Einsatz kommenden Wärmerückgewinnungsvorrichtung.

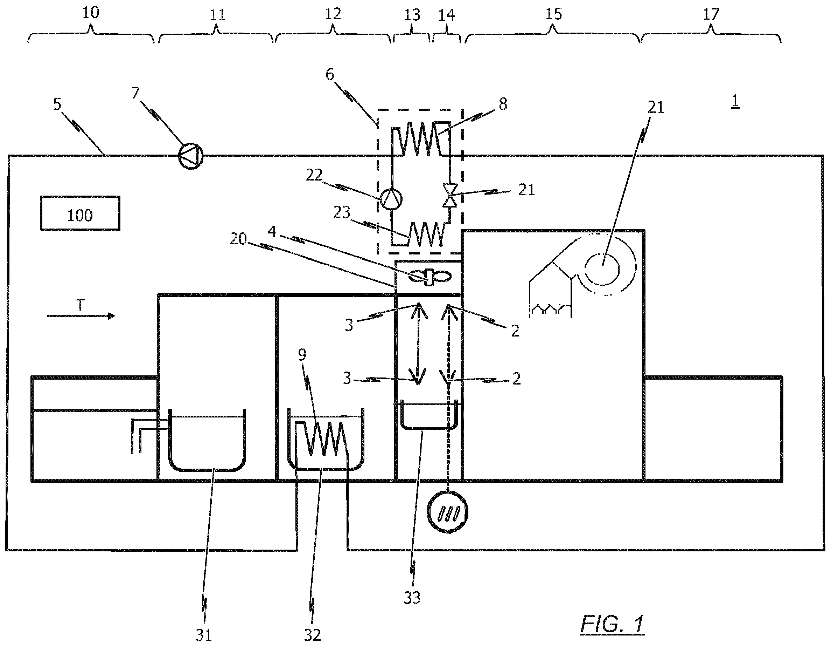

In FIG. 1 ist als Beispiel der erfindungsgemäßen Lösung eine Transportspülmaschine 1 in einer schematischen Längsschnittansicht gezeigt.

Die in FIG. 1 gezeigte exemplarische Ausführungsform der Transportspülmaschine 1 weist eine Vorwaschzone 11 sowie eine in Transportrichtung T des Spülguts gesehen nach der Vorwaschzone 11 angeordnete Hauptwaschzone 12 auf. In Transportrichtung T gesehen nach der Hauptwaschzone 12 ist bei der in FIG. 1 dargestellten Transportspülmaschine 1 eine Nachwasch- bzw. Vorspülzone 13 und eine Klarspülzone 14 angeordnet.

In Transportrichtung T gesehen läuft das entweder unmittelbar auf ein Transportband aufgenommene Spülgut oder durch Körbe gehaltene Spülgut durch einen Einlauftunnel 10, die sich dadurch anschließende Vorwaschzone 11, die Hauptwaschzone 12, die Nachwasch- bzw. Vorspülzone 13, die Klarspülzone 14, und durch eine Trocknungszone 15 in eine Auslaufstrecke 17 ein.

Den genannten Behandlungszonen 11, 12, 13 und 14 der Transportspülmaschine 1 sind jeweils Sprühdüsen zugeordnet, über welche Flüssigkeit auf das Spülgut gesprüht wird, das von dem Transportband durch die jeweiligen Behandlungszonen 11, 12, 13, 14 transportiert wird.

Obwohl in den Zeichnungen nicht dargestellt, ist es bevorzugt, wenn die Sprühdüsen beispielsweise des der Vorwaschzone 11 und der Hauptwaschzone 12 zugeordneten Waschsystems jeweils in einem oberen und unteren Waschrohr ausgebildet sind, so dass in diesen Behandlungszonen 11, 12 entsprechende Wascharme zum Einsatz kommen. Denkbar hierbei ist es, dass die zum Einsatz kommenden Waschsysteme eine Vielzahl von Waschrohre aufweisen, welche eine Wascharmbatterie bilden, wobei die Vielzahl der Waschrohre über ein vorzugsweise gemeinsames Leitungssystem mit einer entsprechenden Waschpumpe verbunden ist.

Wie in FIG. 1 angedeutet, ist jeder Waschzone (Vorwaschzone 11, Hauptwaschzone 12, Nachwaschzone 13) jeweils ein Tank (Waschtank 31, 32, 33) zugeordnet, in welchem versprühte Flüssigkeit aufgenommen wird, und/oder in welchem Flüssigkeit für die Sprühdüsen der betreffenden Zonen 11, 12, 13 bereitgestellt wird.

Unter dem hierin verwendeten Begriff "Waschzone" ist grundsätzlich eine Behandlungszone zu verstehen, welcher ein Umwälztank (Waschtank) zugeordnet ist, und in welcher die in dem Umwälztank der Behandlungszone gesammelte Flüssigkeit mit Hilfe einer der Behandlungszone zugeordneten Waschpumpe umgewälzt wird. Unter dem Begriff "Waschzone" fällt somit die Waschzone 11, die Hauptwaschzone 12, aber auch eine gegebenenfalls der Hauptwaschzone 12 in Transportrichtung T des Spülguts gesehen nachgeschalteten Nachwaschzone 13. Die Nachwaschzone 13 wird im Fachgebiet des gewerblichen Spülens gelegentlich auch als "Pumpen-Klarspülzone" oder "Vorspülzone" bezeichnet. Hierbei handelt es sich um eine Umwälz-Klarspülung, die der Frischwasser-Klarspülung vorgeschaltet ist.

Hingegen wird in dem hierin verwendeten Begriff "Klarspülzone" eine Zone verstanden, in welcher eine Frischwasser-Klarspülung stattfindet, bei welcher das Spülgut mit Frischwasser, welches gegebenenfalls mit Klarspüler versetzt ist, besprüht wird, um das Spülgut restlos von Schmutzpartikel und Reinigerlösung zu befreien.

Bei den in den Zeichnungen dargestellten exemplarischen Ausführungsformen findet somit in der Klarspülzone 14 der letzte Spülgang vor der Trocknung in der Trocknungszone 15 statt. Der Trocknungszone 15 ist ein entsprechendes Gebläse 21 zugeordnet, um das bereits gereinigte Spülgut mit warmer Luft zu umströmen und dieses dadurch zu trocknen.

Des Weiteren ist eine in den Zeichnungen nur schematisch dargestellte Steuereinrichtung 100 vorgesehen, welche bei der in den Zeichnungen dargestellten Ausführungsform der Erfindung (unter anderem) dazu dient, die jeweiligen Waschpumpen der Waschzonen 11, 12, 13 während eines Waschprozesses geeignet anzusteuern, um zumindest zeitweise über das zugehörige Leitungssystem Waschflüssigkeit zu den entsprechenden Sprühdüsen zuzuführen.

Bei der in FIG. 1 dargestellten Transportspülmaschine 1 wird Klarspülflüssigkeit in Form von Frischwasser, welches mit weiteren chemischen Zusätzen, wie beispielsweise Klarspüler, versetzt sein kann, über die oberhalb und unterhalb eines Transportbandes angeordnete Sprühdüsen 2 der Klarspülzone 14 auf das in FIG. 1 nicht dargestellte Spülgut gesprüht. Obwohl ebenfalls nicht dargestellt, können in der Klarspülzone 14 auch seitlich angeordnete Sprühdüsen vorgesehen sein.

Ein Teil der in der Klarspülzone 14 versprühten Klarspülflüssigkeit wird über ein Kaskadensystem entgegen der Transportrichtung T des Spülgutes von Zone zu Zone transportiert. Der restliche Teil wird über ein Ventil und eine Bypassleitung direkt in den Vorwaschtank 31 der Vorwaschzone 11 geleitet (nicht dargestellt).

Die in der Klarspülzone 14 versprühte Klarspülflüssigkeit wird in dem Tank (Nachwasch- bzw. Vorspültank 33) der Nachwasch- bzw. Vorspülzone 13 aufgefangen, von welchem sie über die zu dem Waschsystem der Nachwasch- bzw. Vorspülzone 13 gehörende Waschpumpe zu den Sprühdüsen 3 (Nachwasch- bzw. Vorspüldüsen) der Nachwasch- bzw. Vorspülzone 13 gefördert wird. In der Nachwasch- bzw. Vorspülzone 13 wird Waschflüssigkeit von dem Spülgut abgespült.

Die hierbei anfallende Flüssigkeit fließt in den Waschtank 32 der Hauptwaschzone 12, wird üblicherweise mit einem Reiniger versehen und mit Hilfe einer zu dem Waschsystem der Hauptwaschzone 12 gehörenden Waschpumpe über Sprühdüsen (Waschdüsen) des zur Hauptwaschzone 12 gehörenden Waschsystems auf das Spülgut gesprüht.

Von dem Waschtank 32 der Hauptwaschzone 12 fließt die Waschflüssigkeit anschließend in den Vorwaschtank 31 der Vorwaschzone 11. Die in dem Vorwaschtank 31 gesammelte Waschflüssigkeit wird in der Vorwaschzone 11 mit Hilfe einer zu dem Waschsystem der Vorwaschzone gehörenden Waschpumpe über Sprühdüsen (Vorwaschdüsen) des zu der Vorwaschzone 11 gehörenden Waschsystems auf das Spülgut gesprüht, um grobe Verunreinigungen von dem Spülgut zu entfernen.

Hierbei ist es denkbar, dass ein Teil der in der Hauptwaschzone 12 versprühten Waschflüssigkeit über ein Überlaufsystem in den Waschtank (Vorwaschtank 31) der Vorwaschzone 11 gelangt. Wie auch die Hauptwaschzone 12 kann die Vorwaschzone 11 mit einem als Flächensieb ausgebildeten Tankabdecksieb ausgerüstet sein. Dieses Tankabdecksieb ist vorzugsweise oberhalb des Waschtanks (Vorwaschtank 31) der Vorwaschzone 11 angeordnet, um Schmutzpartikel von der in der Vorwaschzone 11 versprühten und durch Schwerkraft in den Vorwaschtank 31 zurückfließenden Waschflüssigkeit abzutrennen. Die Maschenweite des Tankabdecksiebes liegt vorzugsweise in einem Bereich zwischen ca. 1 mm bis 4 mm.

Durch die erwärmte Wasch- und Klarspülflüssigkeit entstehen beim Versprühen dieser innerhalb der Wasch- und Klarspülzonen 11, 12, 13, 14 der Transportspülmaschine 1 Dampfschwaden (Wrasen). Um ein Austreten dieser Dampfschwaden aus der Transportspülmaschine 1 zu verhindern, ist es von Vorteil, wenn bei der in FIG. 1 schematisch dargestellten Ausführungsform die einzelnen Behandlungszonen und insbesondere die Wasch- und Klarspülzonen 11, 12, 13, 14 mit Vorhängen abgetrennt sind.

Um die während des Betriebs der Transportspülmaschine 1 entstehenden Dampfschwaden (Wrasen) sowie feuchte, warme Luft aus dem Inneren der Transportspülmaschine 1 abzuführen, ist die Transportspülmaschine 1 mit einem maschinenseitigen Abluftsystem 20 ausgerüstet, welches ausgelegt ist, zumindest einen Großteil der beim Betrieb der Transportspülmaschine 1 in den Behandlungszonen 11, 12, 13, 14 entstehenden warmen und feuchten Luft als Abluft aus den jeweiligen Behandlungszonen 11, 12, 13, 14 der Maschine abzuführen.

Bei der in FIG. 1 dargestellten Ausführungsform der erfindungsgemäßen Transportspülmaschine 1 ist das zentrale Abluftsystem 20 im Bereich bei der Nachwasch- bzw. Vorspülzone 13 und der Klarspülzone 14 angeordnet. Das Abluftsystem 20 weist in der dargestellten Ausführungsform einen einzigen Abluftventilator 4 auf, der über die Steuereinrichtung 100 ansteuerbar ist, um die Förderleistung des Abluftventilators 4 einstellen zu können.

Dem Abluftsystem 20 ist ferner eine vorzugsweise ebenfalls über die Steuereinrichtung 100 ansteuerbare Abluftwärmerückgewinnungssystem zugeordnet, welche dazu dient, kontinuierlich oder bedarfsweise der mit dem Abluftsystem 20 aus der Transportspülmaschine 1 abzuführenden Abluft thermische Energie zu entziehen und somit die aus der Transportspülmaschine 1 abzuführenden Abluft abzukühlen.

Nachfolgend wird das bei der in FIG. 1 schematisch dargestellten exemplarischen Ausführungsform der Transportspülmaschine 1 zum Einsatz kommende Wärmerückgewinnungssystem 50 näher beschrieben.

Im Einzelnen ist bei der in FIG. 1 gezeigten Ausführungsform das Wärmerückgewinnungssystem 50 bzw. die Wärmerückgewinnungsvorrichtung als Abluftwärmerückgewinnungsvorrichtung ausgeführt. Grundsätzlich ist es aber auch denkbar, die Wärmerückgewinnungsvorrichtung als Abwasserwärmerückgewinnungsvorrichtung einzusetzen.

Die zur Abluftwärmerückgewinnung in FIG. 1 dienende Wärmerückgewinnungsvorrichtung (Wärmerückgewinnungssystem 50) dient zur Energierückgewinnung (und somit zum Einsparen von Ressourcen im Betrieb der Transportspülmaschine 1) und insbesondere zum Verzicht auf bauseitige Abluftabführungsinstallationen.

Zu diesem Zweck weist die in FIG. 1 schematisch dargestellte Ausführungsform der erfindungsgemäßen Transportspülmaschine 1 die bereits erwähnte und als Abluftwärmerückgewinnungssystem ausgeführte Wärmerückgewinnungsvorrichtung (Wärmerückgewinnungssystem 50) auf, welche nach dem Prinzip der Wärmepumpentechnik arbeitet.

Die Wärmerückgewinnungsvorrichtung (Wärmerückgewinnungssystem 50) ist aufgeteilt in ein Primärkreislaufsystem mit einer Wärmepumpen-Baugruppe 6 einerseits und in ein Sekundärkreislaufsystem 5 andererseits.

Die Wärmepumpen-Baugruppe 6 weist eine Verdampfereinheit 23 auf, die - wie in FIG. 1 schematisch angedeutet - im maschinenseitigen Abluftsystem 20 oder am Ausgang des maschinenseitigen Abluftsystems 20 angeordnet ist. In der Verdampfereinheit 23 verdampft ein Kältemittel, insbesondere ein natürliches Kältemittel auf der Basis von Kohlenwasserstoffen, insbesondere Propan oder Isobutan, wenn der Verdampfer von der feuchtwarmen Abluft der Transportspülmaschine 1 umströmt wird.

Auf diese Weise kann im Betrieb der Transportspülmaschine 1 die Maschinenabluft von ihren ursprünglich beispielsweise 45 °C auf Raumtemperatur bzw. etwa 18 °C bei einer relativen Luftfeuchtigkeit von 100 % abgekühlt werden, so dass die Maschinenabluft dann unmittelbar in den Aufstellraum der Transportspülmaschine 1 (Spülküche) eingeleitet werden kann und insbesondere kein bauseitiges Abluftsystem erforderlich ist.

Das in der Verdampfereinheit 23 der Wärmepumpen-Baugruppe 6 verdampfte Kältemittel wird nach vollständiger Verdampfung und Überhitzung im gasförmigen Zustand durch einen ebenfalls zur Wärmepumpen-Baugruppe 6 gehörende Kompressor- oder Verdichtereinheit 22 verdichtet und so auf ein höheres Druckund Temperaturniveau gebracht.

Auf der Hochdruckseite der Kompressor- oder Verdichtereinheit 22 wird dann die zuvor aus der feuchtwarmen Abluft aufgenommene thermische Energie über ein Wärmetauschereinheit 8 zunächst auf ein in dem Sekundärkreislaufsystem 5 zirkulierendes Trägermedium und dann über eine zu dem Sekundärkreislaufsystem 5 gehörende Wärmetauschereinheit 9 indirekt auf die in der Hauptwaschzone 12 zu versprühende Waschflüssigkeit übertragen.

Selbstverständlich ist es aber auch alternativ oder zusätzlich denkbar, die aus der feuchtwarmen Abluft aufgenommene thermische Energie als Nutzwärme bzw. Wärmeleistung an die in der Trocknungszone 15 mit Hilfe des Gebläses 21 einzubringende Trocknungsluft und/oder an die zu versprühende Klarspülflüssigkeit (Frischwasser) abzugeben.

Besonders hervorzuheben ist in diesem Zusammenhang, dass alle Komponenten 8, 21, 22, 23 der auf dem Prinzip der Wärmepumpentechnik basierenden Wärmepumpen-Baugruppe 6 in einem Gehäuse untergebracht sind, welches als Modul vorzugsweise auf dem Maschinendach der Transportspülmaschine 1 platziert werden kann.

Bei dem in FIG. 1 gezeigten Beispiel ist das Sekundärkreislaufsystem 5 als ein geschlossenes Kreislaufsystem ausgebildet, in welchem ein Trägermedium mit Hilfe einer zum Sekundärkreislaufsystem 5 gehörenden Pumpe 7 zirkuliert. Bei dem Trägermedium kann es sich beispielsweise um Wasser oder um ein auf Wasser basierendes Trägermedium handeln.

Mit Hilfe einer Wärmetauschereinheit 8, die insbesondere als Plattenwärmetauscher ausgeführt ist, wird zumindest ein Teil der thermischen Energie des in dem Primärkreislaufsystem zirkulierenden Kältemittels auf das Trägermedium übertragen. Anschließend wird das erhitzte Trägermedium mit Hilfe der dem Sekundärkreislaufsystem 5 zugeordneten Pumpe 7 einer beispielsweise im Waschtank 32 der Transportspülmaschine 1 angeordneten Wärmetauschereinheit 9 zugeführt, in welchem ein Teil der kinetischen Energie des erhitzten Trägermediums auf die Waschflüssigkeit übertragen wird.

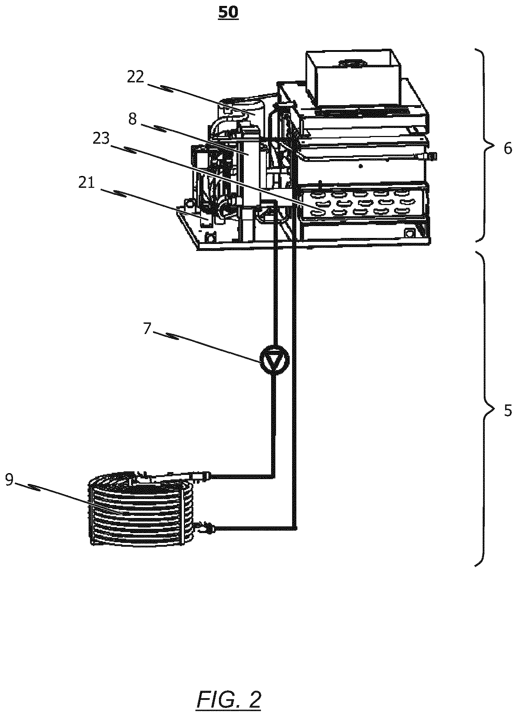

In FIG. 2 ist schematisch und in einer isometrischen Ansicht eine Wärmerückgewinnungsvorrichtung (Wärmerückgewinnungssystem 50) gezeigt, welche beispielsweise auch bei der Transportspülmaschine 1 gemäß FIG. 1 zum Einsatz kommen kann.

Zu erkennen ist, dass die Wärmerückgewinnungsvorrichtung (Wärmerückgewinnungssystem 50) aufgeteilt ist in ein Primärkreislaufsystem mit einer Wärmepumpen-Baugruppe 6 einerseits und in ein Sekundärkreislaufsystem 5 andererseits. Die Wärmepumpen-Baugruppe 6 ist als kompaktes Modul ausgeführt und weist eine entsprechende Verdampfereinheit 23, eine mit der Verdampfereinheit 23 in Fluidverbindung stehende Verdichtereinheit 22, eine Verflüssigereinheit, welche in Fluidverbindung mit der Verdichtereinheit 22 steht, und eine mit der Verflüssigereinheit 8 und der Verdampfereinheit 23 stehende Expansionsventileinheit 21 auf.

Darüber hinaus umfasst die Wärmepumpen-Baugruppe 6 einen insbesondere als Plattenwärmetauscher ausgeführten Wärmetauscher 8 auf, über den zumindest ein Teil der aus der Abluft- und/oder aus dem Abwasser der Spülmaschine rückgewonnene kinetische Energie auf das Trägermedium des Sekundärkreislaufs 5 übertragen wird.

Der Sekundärkreislauf selber umfasst eine Pumpe 7, um das in dem Wärmetauscher 8 der Wärmepumpen-Baugruppe 6 erhitzte Trägermedium einem zweiten Wärmetauscher 9 zuzuführen, der beispielsweise in einem Waschtank 32 der Spülmaschine 1 angeordnet ist. Dort gibt das zuvor erhitzte Trägermedium des Sekundärkreislaufsystems 5 zumindest einen Teil seiner kinetischen Energie an beispielsweise die Waschflüssigkeit im Waschtank 32 ab, wonach das dann entsprechend heruntergekühlte Trägermedium wieder zurück zu dem Wärmetauscher 8 der Wärmepumpen-Baugruppe 6 gefördert wird.

Die Erfindung ist nicht auf die in den Zeichnungen gezeigten Ausführungsbeispiele beschränkt, sondern ergibt sich aus einer Zusammenschau sämtlicher hierin offenbarter Merkmale.

Insbesondere ist das zuvor beschriebene erfindungsgemäße Wärmerückgewinnungssystem 50 bzw. die zuvor beschriebene erfindungsgemäße Wärmerückgewinnungsvorrichtung (Wärmerückgewinnungssystem 50) auch bei entsprechenden Programmautomaten einsetzbar.

## Patentansprüche

1. Spülmaschine (1), insbesondere gewerbliche Spülmaschine (1), welche als Programmautomat oder als Transportspülmaschine ausgeführt ist, wobei die Spülmaschine (1) eine Wärmerückgewinnungsvorrichtung (50) aufweist, die ausgebildet ist, zumindest einen Teil der thermischen Energie des beim Betrieb der Spülmaschine (1) aus der Spülmaschine (1) abgeführten oder abzuführenden Abwassers und/oder zumindest einen Teil der thermischen Energie der beim Betrieb der Spülmaschine (1) aus der Spülmaschine (1) abgeführten oder abzuführenden Abluft als Nutzwärme rückzugewinnen und auf mindestens eine in der Spülmaschine (1) zu versprühende Behandlungsflüssigkeit, insbesondere Waschflüssigkeit und/oder Klarspülflüssigkeit, und/oder auf eine zur Trocknung in der Spülmaschine (1) verwendete Trocknungsluft zu übertragen,
dadu rch gekennzeichnet, dass
die Wärmerückgewinnungsvorrichtung (50) ein Primärkreislaufsystem mit einer Wärmepumpen-Baugruppe (6) und mindestens ein Sekundärkreislaufsystem (5) aufweist, wobei die Wärmepumpen-Baugruppe (6) ausgebildet ist, zumindest einen Teil der rückzugewinnenden thermischen Energie des Abwassers und/oder der Abluft auf ein in dem Primärkreislaufsystem zirkulierendes Kältemittel zu übertragen, und wobei die Wärmepumpen-Baugruppe (6) eine dem Sekundärkreislaufsystem (5) zugeordnete Wärmetauschereinheit (8) und das Sekundärkreislaufsystem (5) mindestens eine in Fluidverbindung mit der Wärmetauschereinheit (8) der Wärmepumpen-Baugruppe (6) stehende Wärmetauschereinheit (9) aufweist, wobei mit Hilfe der Wärmetauschereinheit (8) der Wärmepumpen-Baugruppe (6) zumindest ein Teil der auf das in dem Primärkreislaufsystem zirkulierende Kältemittel übertragenen thermischen Energie auf ein in dem Sekundärkreislaufsystem (5) zirkulierendes fluides, insbesondere liquides, Trägermedium übertragen wird, und wobei mit Hilfe der mindestens einen Wärmetauschereinheit (9) des Sekundärkreislaufsystems (5) zumindest ein Teil der auf das in dem Sekundärkreislaufsystem (5) zirkulierenden Trägermedium übertragenen thermischen Energie als Nutzwärme auf die mindestens eine in der Spülmaschine (1) zu versprühende Behandlungsflüssigkeit und/oder auf die Trocknungsluft übertragen wird.

2. Spülmaschine (1) nach Anspruch 1,
wobei das in dem Primärkreislaufsystem zirkulierende Kältemittel ein natürliches Kältemittel, insbesondere auf der Basis von Kohlenwasserstoffen ist, und vorzugsweise ein Kältemittel, welches vorzugsweise Propan oder Isobutan ist oder Propan oder Isobutan aufweist, insbesondere ein zur Gruppe R290a oder R600a gehörendes Kältemittel.

3. Spülmaschine (1) nach Anspruch 1 oder 2,
wobei die Masse des in dem Primärkreislaufsystem zirkulierenden Kältemittels maximal 1.000 g und vorzugsweise maximal 700 g und noch bevorzugter maximal 400 g und insbesondere maximal 150 g beträgt.

4. Spülmaschine (1) nach einem der Ansprüche 1 bis 3,
wobei das Sekundärkreislaufsystem (5) als ein geschlossenes Kreislaufsystem ausgeführt ist.

5. Spülmaschine (1) nach einem der Ansprüche 1 bis 4 und insbesondere nach Anspruch 4, wobei das in dem Sekundärkreislaufsystem (5) zirkulierende Trägermedium ein auf Wasser basierendes Trägermedium oder Wasser ist.

6. Spülmaschine (1) nach einem der Ansprüche 1 bis 3,
wobei das Sekundärkreislaufsystem (5) als ein offenes Kreislaufsystem ausgeführt ist, und wobei das in dem Sekundärkreislaufsystem (5) zirkulierende Trägermedium eine in der Spülmaschine (1) zu versprühende Behandlungsflüssigkeit, insbesondere Waschflüssigkeit oder Klarspülflüssigkeit, ist.

7. Spülmaschine (1) nach einem der Ansprüche 1 bis 6,
wobei das Sekundärkreislaufsystem (5) eine insbesondere über eine Steuereinrichtung (100) ansteuerbare Pumpe (7) aufweist, mit welcher bedarfsweise das Trägermedium durch das Sekundärkreislaufsystem (5) förderbar ist.

8. Spülmaschine (1) nach einem der Ansprüche 1 bis 7,
wobei die Wärmetauschereinheit (8) der Wärmepumpen-Baugruppe (6) einen Plattenwärmetauscher aufweist.

9. Spülmaschine (1) nach einem der Ansprüche 1 bis 8,
wobei die mindestens eine Wärmetauschereinheit (9) des Sekundärkreislaufsystems (5) in einem Waschtank (32) der Spülmaschine (1), in einem Frischwassertank der Spülmaschine (1) und/oder in einem Bereich zum Erwärmen von Trocknungsluft angeordnet ist.

10. Spülmaschine (1) nach einem der Ansprüche 1 bis 9, insbesondere nach Anspruch 9, wobei das Sekundärkreislaufsystem (5) eine erste Wärmetauschereinheit (9) aufweist, welche über ein erstes Abzweigungsleitungssystem mit der Wärmetauschereinheit (8) der Wärmepumpen-Baugruppe (6) in Fluidverbindung steht oder bedarfsweise mit Hilfe einer ersten Ventilanordnung mit der Wärmetauschereinheit (8) der Wärmepumpen-Baugruppe (6) in Fluidverbindung bringbar ist, und wobei das Sekundärkreislaufsystem (5) ferner mindestens eine zweite Wärmetauschereinheit (9) aufweist, welche über ein insbesondere parallel zum ersten Abzweigungsleitungssystem verlaufendes zweites Abzweigungsleitungssystem mit der Wärmetauschereinheit (8) der Wärmepumpen-Baugruppe (6) in Fluidverbindung steht oder bedarfsweise mit Hilfe einer zweiten Ventilanordnung in Fluidverbindung mit der Wärmetauschereinheit (8) der Wärmepumpen-Baugruppe (6) bringbar ist.

11. Spülmaschine (1) nach einem der Ansprüche 1 bis 10,
wobei die Wärmepumpen-Baugruppe (6) der Wärmerückgewinnungsvorrichtung (50) in einen Hochdruckbereich und in einen Niederdruckbereich unterteilt ist, und wobei die Wärmepumpen-Baugruppe (6) Folgendes aufweist:
- eine dem Niederdruckbereich der Wärmepumpen-Baugruppe (6) zugeordnete Verdampfereinheit (23), welche derart ausgebildet ist, dass zumindest ein Teil der kinetischen Energie der Abluft und/oder des Abwassers der Spülmaschine (1) auf das in dem Primärkreislaufsystem zirkulierende Kältemittel übertragbar ist, und zwar unter gleichzeitigem zumindest teilweisen Verdampfen des Kältemittels;
- eine mit der Verdampfereinheit (23) in Fluidverbindung stehende Verdichtereinheit (22), welche ausgebildet ist, das in der Verdampfereinheit (23) zumindest teilweise verdampfte Kältemittel auf ein höheres Druckniveau zu verdichten;
- eine dem Hochdruckbereich der Wärmepumpen-Baugruppe (6) zugeordnete Verflüssigereinheit, welche in Fluidverbindung mit der Verdichtereinheit (22) steht und ausgebildet ist, das in der Verdichtereinheit (22) verdichtete Kältemittel bei hoher Temperatur zu verflüssigen, wobei zumindest ein Teil der der Verflüssigungstemperatur entsprechenden kinetischen Energie über die Wärmetauschereinheit (8) der Wärmepumpen-Baugruppe (6) auf das in dem Sekundärkreislaufsystem (5) zirkulierende Trägermedium übertragen wird; und
- eine in Fluidverbindung mit der Verflüssigereinheit und der Verdampfereinheit (23) stehende Expansionsventileinheit (21), welche ausgebildet ist, das in der Verflüssigereinheit verflüssigte Kältemittel wieder auf den Verdampfungsdruck zu entspannen.

12. Spülmaschine (1) nach einem der Ansprüche 1 bis 11, insbesondere nach Anspruch 11, wobei die Einheiten (8, 21, 22, 23) der Wärmepumpen-Baugruppe (6) in einem Gehäuse aufgenommen sind, welches derart an der Spülmaschine (1) angeordnet ist, dass die Einheiten der Wärmepumpen-Baugruppe (6) von außen zugänglich sind.

13. Spülmaschine (1) nach einem der Ansprüche 1 bis 12,
wobei die Wärmepumpen-Baugruppe (6) als ein austausch- oder auswechselbares Modul der Spülmaschine (1) ausgeführt ist.

14. Spülmaschine (1) nach einem der Ansprüche 1 bis 13,
wobei die Spülmaschine (1) als Transportspülmaschine mit einer Transportvorrichtung zum Transportieren von Spülgut durch die einzelnen Behandlungszonen (11, 12, 13, 14, 15) der Transportspülmaschine ausgeführt ist, wobei die Transportspülmaschine mindestens eine Waschzone (11, 12) aufweist, in welcher Waschflüssigkeit aus einem der mindestens einen Waschzone (11, 12) zugeordneten Waschtank (31, 32) auf das Spülgut gesprüht wird, wobei die Transportspülmaschine ferner mindestens eine in Transportrichtung (T) des Spülguts gesehen hinter der mindestens einen Waschzone (11, 12) angeordnete Klarspülzone (13, 14) aufweist, in welcher Klarspülflüssigkeit auf das Spülgut gesprüht wird, und wobei die Transportspülmaschine ferner ein Abluftsystem (20) aufweist zum Abführen von Abluft aus der Transportspülmaschine.

15. Spülmaschine (1) nach Anspruch 14,
wobei die Wärmerückgewinnungsvorrichtung (50) als Abluftwärmerückgewinnungsvorrichtung ausgeführt ist zum Übertragen von zumindest einem Teil der thermischen Energie der aus der Transportspülmaschine abgeführten oder abzuführenden Abluft als Nutzwärme auf die in der mindestens einen Klarspülzone (13, 14) zu versprühende Klarspülflüssigkeit und/oder auf die in der mindestens einen Waschzone (11, 12) zu versprühende Waschflüssigkeit.
